# EUROPEAN PATENT SPECIFICATION

(11) **EP 3 332 738 B1**
(45) Date of publication and mention of the grant of the patent: **11.09.2019**
(21) Application number: 17205397.7
(22) Date of filing: 05.12.2017
(51) Int. Cl.: A61C 13/00, A61C 13/12, B23Q 3/06

(54) **PROCESSING TARGET HOLDING DEVICE AND CUTTING DEVICE**
BEARBEITUNGSZIELHALTEVORRICHTUNG UND SCHNEIDVORRICHTUNG
DISPOSITIF DE MAINTIEN DE CIBLE DE TRAITEMENT ET DISPOSITIF DE COUPE

(30) Priority: 07.12.2016 JP 2016237643
(43) Date of publication of application: 13.06.2018
(73) Proprietor: Roland DG Corporation, Shizuoka 431-2103 (JP)
(72) Inventor: HAYASAKA, Keiichi, Hamamatsu-shi, Shizuoka 431-2103 (JP); HANAJIMA, Shingo, Hamamatsu-shi, Shizuoka 431-2103 (JP); SUYAMA, Akihiro, Hamamatsu-shi, Shizuoka 431-2103 (JP)
(74) Representative: Grünecker Patent- und Rechtsanwälte PartG mbB

(56) References cited:
- WO-A1-2007/059845
- DE-A1-102009 011 672
- DE-B3-102016 107 648
- DE-U1-202010 001 125
- US-A1- 2001 021 168
- US-A1- 2014 147 225

## Description

### Field of the Invention

The present invention relates to a processing target holding device for holding a processing target according to the preamble of claim 1 (see for example US20140147225A1) and a cutting device.

Conventionally, a cutting device that cuts a processing target, formed of a ceramic material, a resin material or the like, into a desired shape is known. The processing target is formed in a disc form, for example. In a cutting device of this type, as disclosed in Japanese Patent Application Publication No. 2015-120222, for example, an arc-shaped portion of a disc-shaped processing target is cut by a processing tool in a state in which the arc-shaped portion is held by an approximately C-shaped holding member.

However, the holding member disclosed in Japanese Patent Application Publication No. 2015-120222 includes a first holding member that holds a processing target from an upper side and a second holding member that holds the processing target from a lower side. The first and second holding members are connected by a plurality of screws. A user can allow the second holding member to move toward and away from the first holding member by rotating screws using a predetermined tool. For example, when the holding member holds the processing target, the user fastens screws using a predetermined tool. In this way, the second holding member moves toward the first holding member. The first and second holding members sandwich the processing target whereby the processing target is held. On the other hand, when the processing target is detached from the holding member, the user loosens screws using a predetermined tool. In this way, the second holding member moves away from the first holding member. Therefore, it is possible to detach the processing target from the holding member.

As described above, in the cutting device disclosed in Japanese Patent Application Publication No. 2015-120222, the user needs to rotate screws using a predetermined tool when attaching the processing target to the holding member and detaching the processing target from the holding member.

With the foregoing in view, an object of the present invention is to provide a processing target holding device and a cutting device capable of alleviating user's burdens when attaching and detaching a processing target. According to the present invention said object is solved by a processing target holding device having the features of independent claim 1. Preferred embodiments are laid down in the dependent claims.

A processing target holding device according to the present invention includes a first holding portion, a second holding portion, a guide portion, a first pressing mechanism, and a second pressing mechanism. The first holding portion holds a first end portion, which is one end in a first direction of the processing target, and extends in a second direction orthogonal to the first direction. The second holding portion holds a second end portion, which is an end on an opposite side of the processing target to the first end portion, and extends in the second direction at a position facing the first holding portion. The guide portion is provided in at least any one of the first holding portion and the second holding portion to guide movement of the processing target in the second direction. The first pressing mechanism is provided in the first holding portion to press the processing target toward the second holding portion. The second pressing mechanism is provided in the second holding portion so as to face the first pressing mechanism to press the processing target toward the first holding portion.

According to the processing target holding device of the present invention, the processing target moves in the second direction while being guided to the guide portion in a state in which the first end portion of the processing target is disposed in the first holding portion and the second end portion of the processing target is disposed in the second holding portion. When the processing target is moved and positioned between the first pressing mechanism and the second pressing mechanism, a state in which the processing target is pressed toward the second holding portion by the first pressing mechanism and is pressed toward the first holding portion by the second pressing mechanism is created. In this way, a state in which the processing target is sandwiched between the first pressing mechanism and the second pressing mechanism is created. Therefore, a state in which the processing target is held by the processing target holding device is created. Hence, a user can hold the processing target by the processing target holding device without using a predetermined tool. Moreover, when the processing target is detached from the processing target holding device, the processing target is pulled from the processing target holding device whereby pressing by the first pressing mechanism and the second pressing mechanism is released. Therefore, the user can detach the processing target from the processing target holding device without using a predetermined tool. Therefore, since it is possible to attach and detach the processing target without using a predetermined tool, it is possible to alleviate user's burden.

According to the present invention, it is possible to alleviate user's burdens when attaching and detaching a processing target.

The above and other elements, features, steps, characteristics and advantages of the present invention will become more apparent from the following detailed description of the preferred embodiments with reference to the attached drawings.

FIG. 1 is a perspective view of a cutting device according to a first embodiment;
FIG. 2 is a front view of the cutting device according to the first embodiment;
FIG. 3 is a perspective view of a tool magazine;
FIG. 4 is a perspective view of a rotation supporting member and a holding device;
FIG. 5 is a plan view of a processing target to which an adapter is attached;
FIG. 6 is a perspective view of a holding device;
FIG. 7 is a perspective view illustrating a portion of the holding device at an enlarged scale;
FIG. 8 is a plan view of a holding device and a processing target illustrating a state in which a processing target is not held by the holding device;
FIG. 9 is a plan view illustrating a state in which a processing target is held by the holding device and is a plan view illustrating a portion of the holding device at an enlarged scale;
FIG. 10 is a perspective view of a holding device according to a second embodiment;
FIG. 11 is a conceptual diagram illustrating positional relations between a processing target and a pair of first guide portions (a pair of second guide portions) according to the second embodiment; and
FIG. 12 is a plan view of a holding device and a processing target according to the second embodiment, illustrating a state in which the processing target is not held by the holding device.

Hereinafter, a cutting device having a processing target holding device according to an embodiment of the present invention will be described with reference to the drawings. Naturally, embodiments described herein are not intended to limit the present invention particularly. Moreover, members and portions which provide the same effects are denoted by the same symbols, and redundant description will be appropriately omitted or simplified.

### First Embodiment

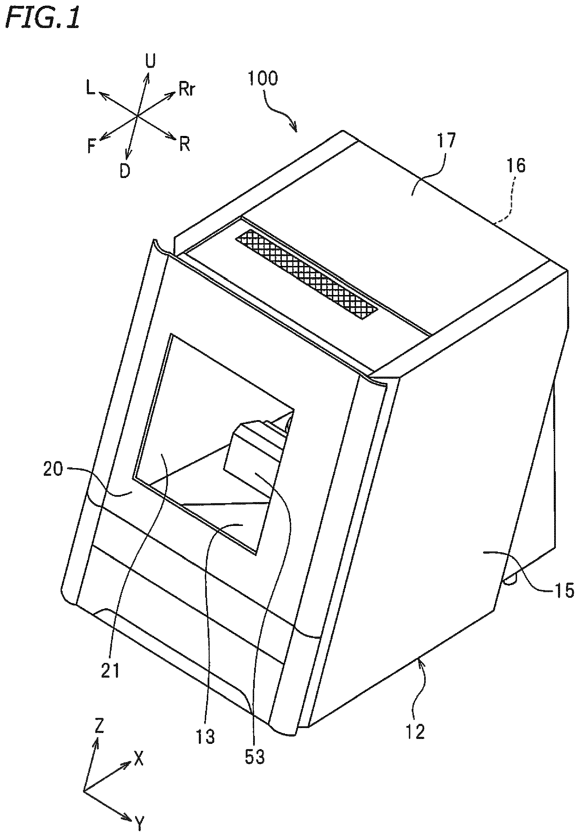

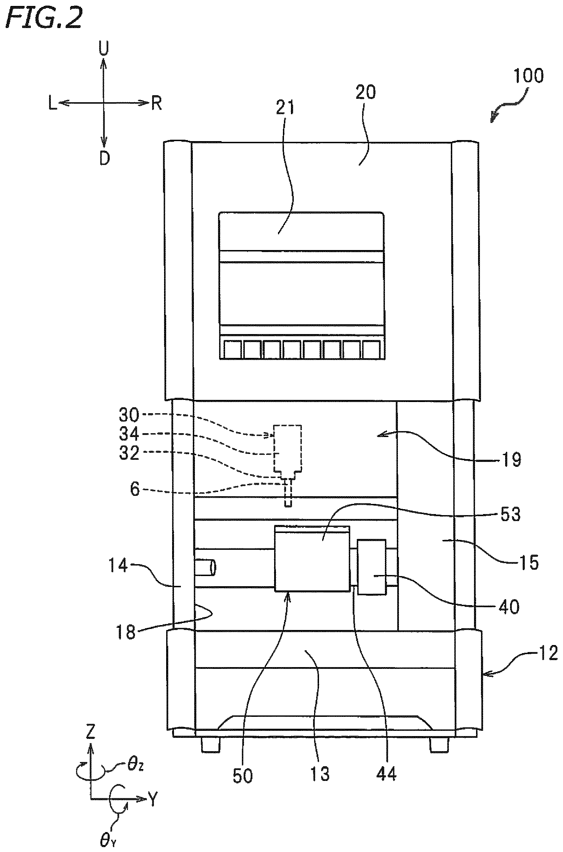

FIG. 1 is a perspective view of a cutting device 100 according to a first embodiment. FIG. 2 is a front view of the cutting device 100 according to the present embodiment. In the following description, when a user being in front of the cutting device 100 faces the cutting device 100, a side on which the user moves away from the cutting device 100 is defined as a front side, and a side on which the user moves toward the cutting device 100 is defined as a rear side. Left, Right, Up, and Down mean the directions left, right, up, and down, respectively, when the user being in front of the cutting device 100 faces the cutting device 100. Moreover, the symbols F, Rr, L, R, U, and D in the drawings mean front, rear, left, right, up, and down, respectively. In the present embodiment, when orthogonal axes X, Y, and Z are defined, the cutting device 100 is disposed on a plane formed by the X and Y-axes. Here, the X-axis is an axis extending in a front-rear direction. The Y-axis is an axis extending in a left-right direction. The Z-axis is an axis extending in an up-down direction. Moreover, symbols θx, θy, and θz indicate rotation directions around X, Y, and Z-axes, respectively. However, the above-described directions are defined for the sake of convenience only. The above-described directions do not limit an installation aspect of the cutting device 100 and do not limit the present invention. In the present embodiment, the front-rear direction corresponds to a "first direction" of the present invention. The left-right direction corresponds to a "second direction" of the present invention.

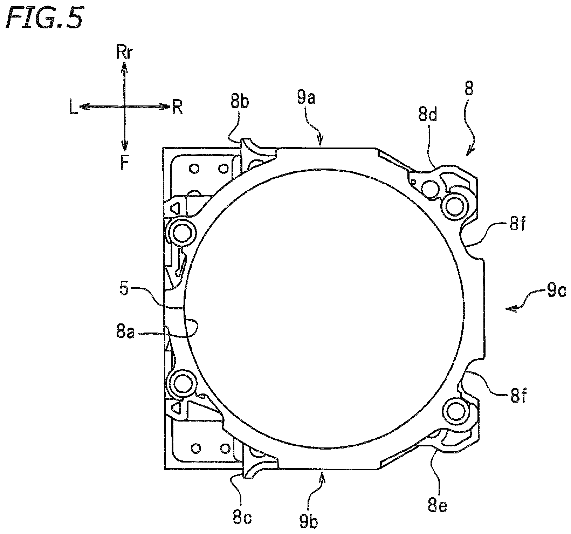

The cutting device 100 is a device that cuts a processing target 5 (see FIG. 5). For example, the cutting device 100 cuts the processing target 5 to produce an artificial tooth. In the present embodiment, the processing target 5 has a disc shape. The processing target 5 is formed of various materials such as zirconia, wax, polymethyl methacrylate resin (PMMA), hybrid resin, polyether ether ketone (PEEK) resin, or gypsum. When zirconia is used as a material of the processing target 5, half-sintered zirconia is used, for example. However, the shape and the material of the processing target 5 are not particularly limited.

As illustrated in FIG. 1, the cutting device 100 is formed in a box form. The cutting device 100 includes a case body 12 and a front cover 20. The case body 12 has a base 13, a left wall 14 (see FIG. 2), a right wall 15, a rear wall 16, and an upper wall 17. The base 13 is a planar member. The left wall 14 extends in an up-down direction from a left end of the base 13. The right wall 15 extends in an up-down direction from a right end of the base 13. The rear wall 16 extends in an up-down direction from a rear end of the base 13. A left end of the rear wall 16 is connected to a rear end of the left wall 14. A right end of the rear wall 16 is connected to a rear end of the right wall 15. The upper wall 17 is connected to the upper ends of the left wall 14, the right wall 15, and the rear wall 16. A front portion of the case body 12 is open. In this example, an opening 18 (see FIG. 2) is formed by the base 13, the left wall 14, the right wall 15, and the upper wall 17. Moreover, an inner space 19 (see FIG. 2) is formed by the base 13, the left wall 14, the right wall 15, the rear wall 16, and the upper wall 17. The inner space 19 is a processing area in which cutting processing of the disc-shaped processing target 5 is performed, for example.

The front cover 20 is configured to be freely open and closed by moving in the up-down direction at the front end of the left wall 14 and the front end of the right wall 15. FIG. 2 illustrates a state in which the front cover 20 is moved upward. In the present embodiment, a window portion 21 is formed in the front cover 20. The window portion 21 is formed of a transparent acrylic board, for example. Due to this, the user can perceive the inner space 19 of the cutting device 100 through the window portion 21.

As illustrated in FIG. 2, the cutting device 100 includes a spindle 30. The spindle 30 is configured to rotate a processing tool 6 to cut the processing target 5 (see FIG. 5). In the present embodiment, the spindle 30 corresponds to a "cutting portion" of the present invention. The spindle 30 is disposed in the inner space 19. The spindle 30 includes a grasping portion 32 and a rotating portion 34.

The grasping portion 32 is configured to grasp an upper end of the processing tool 6. Although not illustrated herein, the grasping portion 32 is made up of a plurality of grasping members aligned on the XY plane. The plurality of grasping members sandwich the upper end of the processing tool 6 whereby the grasping portion 32 grasps the processing tool 6. In the present embodiment, the rotating portion 34 is provided at the upper end of the grasping portion 32.

The rotating portion 34 is configured to rotate the processing tool 6 grasped by the grasping portion 32. The rotating portion 34 extends in the up-down direction. In this example, a motor (not illustrated) is connected to the rotating portion 34. When this motor rotates, the rotating portion 34 rotates in the direction θz around the Z-axis. With rotation of the rotating portion 34, the processing tool 6 grasped by the grasping portion 32 rotates in the direction θz around the Z-axis. Moreover, the rotating portion 34 is configured to move in the left-right direction and the up-down direction with the aid of a first driving member (not illustrated).

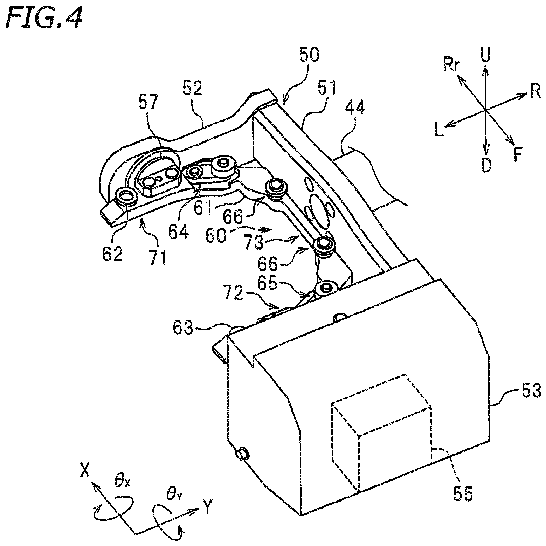

As illustrated in FIG. 2, the cutting device 100 includes a tool magazine 40, a rotation supporting member 50, and a processing target holding device 60 (hereinafter referred to as a holding device 60) (see FIG. 4). In the present embodiment, the tool magazine 40, the rotation supporting member 50, and the holding device 60 are disposed in the inner space 19.

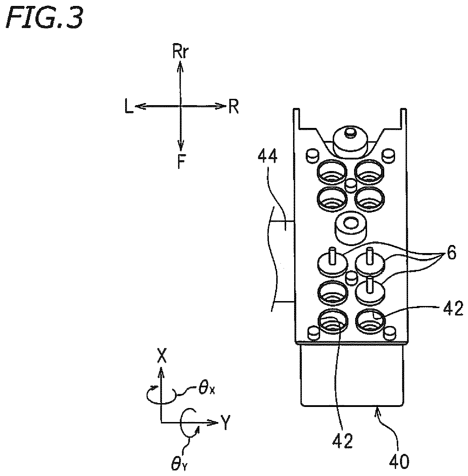

FIG. 3 is a perspective view of the tool magazine 40. As illustrated in FIG. 3, the tool magazine 40 is configured to be able to accommodate a plurality of processing tools 6. In the present embodiment, the tool magazine 40 slidably engages with a guide rail (not illustrated) provided on the right wall 15 (see FIG. 2). The tool magazine 40 is provided so as to move in the front-rear direction along the guide rail. The tool magazine 40 is formed in a box form. A plurality of holes 42 in which the processing tools 6 are accommodated is formed in an upper surface of the tool magazine 40. The processing tool 6 is inserted into the hole 42 in a state in which an upper portion thereof is exposed. When the processing tool 6 is exchanged, the processing tool 6 grasped by the grasping portion 32 is returned to the hole 42. Moreover, the grasping portion 32 and the rotating portion 34 are moved to a position above the processing tool 6 to be used next. After that, the grasping portion 32 grasps the upper end of the processing tool 6 positioned below the grasping portion 32.

As illustrated in FIG. 3, a rotation shaft 44 that rotatably supports the rotation supporting member 50 is provided in the tool magazine 40. The rotation shaft 44 extends in the left-right direction. FIG. 4 is a perspective view of the rotation supporting member 50 and the holding device 60. As illustrated in FIG. 4, the rotation supporting member 50 is connected to the rotation shaft 44. Although not illustrated in the drawing, a second driving member is provided in the tool magazine 40. The rotation shaft 44 is configured to be rotatable in the direction θy around the Y-axis with the aid of the second driving member. When the rotation shaft 44 rotates in the direction θy around the Y-axis, the rotation supporting member 50 rotates in the direction θy around the Y-axis.

The rotation supporting member 50 rotatably supports the holding device 60. The rotation supporting member 50 is formed in an approximately U-shape in a plan view. In the present embodiment, the rotation supporting member 50 includes a first part 51, a second part 52, and a third part 53. The first part 51 is a portion extending in the front-rear direction. The rotation shaft 44 is connected to the first part 51. The second part 52 extends toward the left side from a rear end of the first part 51. The third part 53 extends toward the left side from a front end of the first part 51. The second part 52 and the third part 53 face each other. In this example, the holding device 60 is rotatably supported by a left portion of the second part 52 and a left portion of the third part 53. A motor 55 is provided in the third part 53.

FIG. 5 is a plan view illustrating the processing target 5 to which an adapter 8 is attached. In the present embodiment, as illustrated in FIG. 5, the adapter 8 is attached to the processing target 5 when the processing target 5 is subjected to cutting processing. The processing target 5 is held on the holding device 60 in a state of being attached to the adapter 8. In this example, a fitting hole 8a is formed in a central portion of the adapter 8. The processing target 5 is inserted into the fitting hole 8a whereby the processing target 5 is fitted into the adapter 8.

In the present embodiment, a first locking projection 8b that protrudes backward from the adapter 8 is formed in a left portion of the rear surface of the adapter 8. A second locking projection 8c that protrudes forward from the adapter 8 is formed in a left portion of the front surface of the adapter 8. Moreover, a first pressing groove 8d is formed at a position of the rear surface of the adapter 8 located closer to the right side than the first locking projection 8b. The first pressing groove 8d is depressed toward the front side from the rear surface of the adapter 8. A second pressing groove 8e is formed at a position of the rear surface of the adapter 8 located closer to the right side than the second locking projection 8c. The second pressing groove 8e is depressed toward the rear side from the front surface of the adapter 8. Moreover, in the present embodiment, two positioning grooves 8f are formed in the right surface of the adapter 8. The two positioning grooves 8f are depressed toward the left side from the right surface of the adapter 8. In this example, the two positioning grooves 8f are grooves aligned in the front-rear direction.

In the following description, the processing target 5 refers to the processing target 5 to which the adapter 8 is attached. The processing target 5 includes the adapter 8 attached to the processing target 5 in addition to the processing target 5. In this example, an end portion (in this example, the rear end portion) in the front-rear direction of the processing target 5 to which the adapter 8 is attached is referred to as a first end portion 9a. The other end portion (in this example, the front end portion) in the front-rear direction of the processing target 5 to which the adapter 8 is attached is referred to as a second end portion 9b. Moreover, one end portion (in this example, the right end portion) in the left-right direction of the processing target 5 to which the adapter 8 is attached is referred to as a third end portion 9c. In this example, the first, second, and third end portions 9a, 9b, and 9c include portions of the processing target 5 and the adapter 8 attached to the processing target 5. In the present embodiment, the first end portion 9a includes the first locking projection 8b and the first pressing groove 8d of the adapter 8. The second end portion 9b includes the second locking projection 8c and the second pressing groove 8e of the adapter 8.

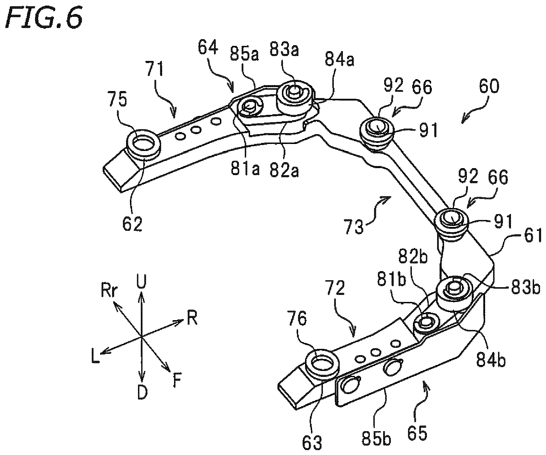

Next, the holding device 60 according to the present embodiment will be described. FIG. 6 is a perspective view of the holding device 60. The holding device 60 is configured to hold the processing target 5 (see FIG. 5). For example, the holding device 60 is a clamp. The holding device 60 includes a main body 61, a first guide portion 62, a second guide portion 63, a first pressing mechanism 64, a second pressing mechanism 65, and a positioning portion 66.

The main body 61 has an approximately C-shape in a plan view. In the present embodiment, the main body 61 includes a first holding portion 71, a second holding portion 72, and a third holding portion 73. The first and second holding portions 71 and 72 are portions extending in the left-right direction. The first and second holding portions 71 and 72 face each other. The first end portion 9a (see FIG. 5) of the processing target 5 is disposed in the first holding portion 71. The first holding portion 71 holds the first end portion 9a of the processing target 5. The second end portion 9b (see FIG. 5) of the processing target 5 is disposed in the second holding portion 72. The second holding portion 72 holds the second end portion 9b of the processing target 5. In the present embodiment, when the holding device 60 holds the processing target 5, the processing target 5 is disposed between the first holding portion 71 and the second holding portion 72.

The third holding portion 73 is connected to the first and second holding portions 71 and 72. Specifically, the front end of the third holding portion 73 is connected to the right end of the second holding portion 72, and the rear end of the third holding portion 73 is connected to the right end of the first holding portion 71. The third holding portion 73 is a portion extending in the front-rear direction.

In the present embodiment, as illustrated in FIG. 4, a first rotation shaft 57 is provided in the first holding portion 71. Although not illustrated in the drawings, a second rotation shaft is provided in the second holding portion 72. The first rotation shaft 57 is rotatably supported by the second part 52 of the rotation supporting member 50. The second rotation shaft provided in the second holding portion 72 is rotatably supported by the third part 53 of the rotation supporting member 50. When the motor 55 is driven, the first rotation shaft 57 and the second rotation shaft rotate. Therefore, the holding device 60 rotates in the direction θx around the X-axis.

As illustrated in FIG. 6, the first and second guide portions 62 and 63 are configured to guide the processing target 5 to which the adapter 8 is attached in the direction toward the third holding portion 73. Moreover, the first and second guide portions 62 and 63 perform a role of positioning the processing target 5 relative to the main body 61 of the holding device 60. In the present embodiment, the first guide portion 62 is provided on an upper surface of the left portion of the first holding portion 71. The second guide portion 63 is provided on an upper surface of the left portion of the second holding portion 72. The first and second guide portions 62 and 63 face each other. The number of first guide portions 62 and the number of second guide portions 63 are not particularly limited. Moreover, an arrangement position of the first guide portions 62 and an arrangement position of the second guide portions 63 are not particularly limited. For example, a plurality of first guide portions 62 may be disposed on the upper surface of the first holding portion 71 so as to be aligned in the left-right direction. A plurality of second guide portions 63 may be disposed on the upper surface of the second holding portion 72 so as to be aligned in the left-right direction.

In the present embodiment, the first and second guide portions 62 and 63 are rollers. The first guide portion 62 is supported by the first holding portion 71. The second guide portion 63 is supported by the second holding portion 72. Specifically, a first guide shaft 75 extending in the up-down direction is provided on the upper surface of the left portion of the first holding portion 71. The first guide portion 62 is fixed to the first guide shaft 75. Similarly, a second guide shaft 76 extending in the up-down direction is provided on the upper surface of the left portion of the second holding portion 72. The second guide portion 63 is fixed to the second guide shaft 76. However, the first guide portion 62 may be rotatably supported by the first holding portion 71. The first guide portion 62 may be rotatably supported by the first guide shaft 75. Moreover, the second guide portion 63 may be rotatably supported by the second holding portion 72. The second guide portion 63 may be rotatably supported by the second guide shaft 76. In the present embodiment, the first and second guide portions 62 and 63 are an example of the "guide portion" of the present invention. Any one of the first and second guide portions 62 and 63 may be omitted.

The first pressing mechanism 64 is a mechanism that presses the processing target 5 toward the second holding portion 72 (that is, toward the front side). In this example, the first pressing mechanism 64 is provided on the upper surface of the first holding portion 71 and a portion of the first holding portion 71 positioned closer to the right side than the first guide portion 62. However, the position of the first pressing mechanism 64 is not particularly limited.

In the present embodiment, the first pressing mechanism 64 includes a first shaft 81a, a first rotating member 82a, a first roller shaft 83a, a first pressing member 84a, and a first spring 85a. The first shaft 81a is provided on the upper surface of the first holding portion 71 on a side closer to the right side than the first guide portion 62. The first shaft 81a is a member extending upward from the first holding portion 71. The first rotating member 82a is provided so as to be rotatable relative to the first shaft 81a. In this example, one end of the first rotating member 82a is provided in the first shaft 81a. The first roller shaft 83a is provided at the other end on the opposite side to one end of the first rotating member 82a. The first roller shaft 83a is a shaft extending upward from the other end of the first rotating member 82a.

The first pressing member 84a is a member that is pressed against the first end portion 9a (see FIG. 5) of the processing target 5. In the present embodiment, the first pressing member 84a engages with the first pressing groove 8d (see FIG. 5) included in the first end portion 9a. The first pressing member 84a is provided on the other end of the first rotating member 82a. In this example, the first pressing member 84a is rotatably provided on the first roller shaft 83a provided on the other end of the first rotating member 82a. Due to this, the first pressing member 84a can rotate relative to the first rotating member 82a.

The first spring 85a is configured to apply elastic force to the first pressing member 84a so that the first pressing member 84a is urged in the direction toward the second holding portion 72. Here, the direction toward the second holding portion 72 is a direction toward the front side. In the present embodiment, the first spring 85a is provided on a surface of the first holding portion 71 on the opposite side to the second holding portion 72. The first spring 85a is provided on the rear surface of the first holding portion 71. The type of the first spring 85a is not particularly limited. In this example, the first spring 85a is a plate spring extending in the left-right direction. In the present embodiment, the first spring 85a is in contact with the first pressing member 84a. The first spring 85a applies elastic force to the first pressing member 84a in a state of being in contact with the first pressing member 84a. In this way, the first pressing member 84a is pressed against the processing target 5 toward the second holding portion 72.

The second pressing mechanism 65 is a mechanism that presses the processing target 5 toward the first holding portion 71 (that is, toward the rear side). In this example, the second pressing mechanism 65 is provided on the upper surface of the second holding portion 72 and a portion of the second holding portion 72 positioned closer to the right side than the second guide portion 63. The second pressing mechanism 65 is provided so as to face the first pressing mechanism 64 in the front-rear direction. However, the position of the second pressing mechanism 65 is not particularly limited.

In the present embodiment, the second pressing mechanism 65 includes a second shaft 81b, a second rotating member 82b, a second roller shaft 83b, a second pressing member 84b, and a second spring 85b. The second shaft 81b is provided on the upper surface of the second holding portion 72 on a side closer to the right side than the second guide portion 63. The second shaft 81b extends upward from the second holding portion 72. The second rotating member 82b is provided so that one end thereof is rotatable relative to the second shaft 81b. The second roller shaft 83b is provided at the other end on the opposite side to one end of the second rotating member 82b. The second roller shaft 83b extends upward from the other end of the second rotating member 82b.

The second pressing member 84b is a member that is pressed against the second end portion 9b (see FIG. 5) of the processing target 5. In the present embodiment, the second pressing member 84b engages with the second pressing groove 8e (see FIG. 5) included in the second end portion 9b. The second pressing member 84b is provided at the other end of the second rotating member 82b. The second pressing member 84b is rotatably provided on the second roller shaft 83b. Therefore, the second pressing member 84b can rotate relative to the second rotating member 82b. The second spring 85b is configured to apply elastic force to the second pressing member 84b so that the second pressing member 84b is urged in the direction toward the first holding portion 71. Here, the direction toward the first holding portion 71 is a direction toward the rear side. In the present embodiment, the second spring 85b is provided on a surface of the second holding portion 72 on the opposite side to the first holding portion 71. The second spring 85b is provided on the front surface. The type of the second spring 85b is not particularly limited. In this example, the second spring 85b is a plate spring extending in the left-right direction similarly to the first spring 85a. In the present embodiment, the second spring 85b is in contact with the second pressing member 84b. The second spring 85b applies elastic force to the second pressing member 84b in a state of being in contact with the second pressing member 84b. In this way, the second pressing member 84b is pressed against the processing target 5 toward the first holding portion 71.

The positioning portion 66 is configured to position the processing target 5 (see FIG. 5) relative to the main body 61. The third end portion 9c (see FIG. 5) of the processing target 5 is pressed against the positioning portion 66. In this example, two positioning portions 66 are formed on the upper surface of the third holding portion 73. The two positioning portions 66 are disposed to be aligned in the front-rear direction. However, the number and the arrangement position of the positioning portions 66 are not particularly limited. For example, the number of positioning portions 66 may be one or three or more.

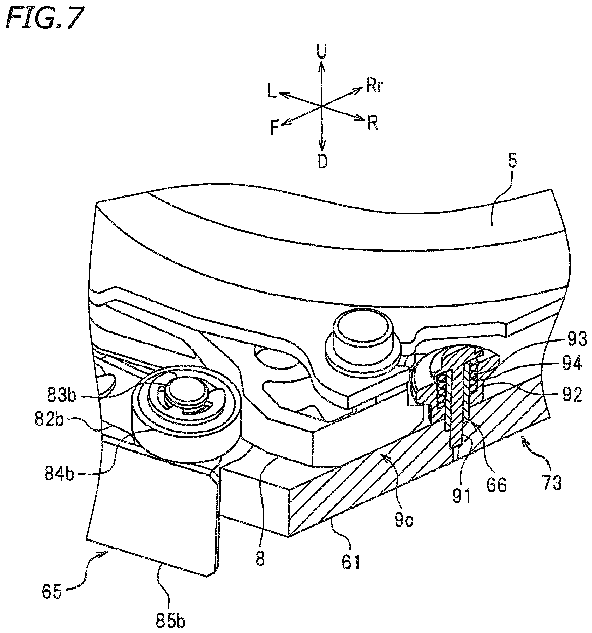

In the present embodiment, the two positioning portions 66 have the same configuration. FIG. 7 is a perspective view illustrating a portion of the holding device 60 at an enlarged scale. FIG. 7 illustrates a cross-sectional view of the positioning portion 66 and the surrounding of the positioning portion 66. As illustrated in FIG. 7, the positioning portion 66 includes a pin 91, a sandwiching member 92, and a sandwiching spring 93. The pin 91 is provided on the third holding portion 73 so as to extend upward from the upper surface of the third holding portion 73. In the present embodiment, a pin hole (not illustrated) is formed in the upper surface of the third holding portion 73. The lower portion of the pin 91 is inserted into the pin hole. The sandwiching member 92 is a member that sandwiches the third end portion 9c of the processing target 5 in cooperation with the third holding portion 73. The pin 91 is inserted into the sandwiching member 92. The sandwiching member 92 is a roller that can rotate relative to the pin 91. As illustrated in FIG. 6, a left portion of the sandwiching member 92 protrudes leftward from the third holding portion 73 in a plan view.

As illustrated in FIG. 7, the sandwiching spring 93 is a spring that applies elastic force to the sandwiching member 92 so that the sandwiching member 92 is urged toward the third holding portion 73. In the present embodiment, an accommodation hole 94 is formed in the upper surface of the sandwiching member 92. The sandwiching spring 93 is accommodated in the accommodation hole 94 of the sandwiching member 92 and is disposed so as to surround the shaft of the pin 91. The type of the sandwiching spring 93 is not particularly limited. In this example, the sandwiching spring 93 is a coil spring. In the present embodiment, the sandwiching spring 93 applies elastic force toward the bottom surface of the accommodation hole 94 of the sandwiching member 92. The sandwiching spring 93 applies elastic force to the bottom surface of the accommodation hole 94 in a state in which the third end portion 9c of the processing target 5 is disposed between the sandwiching member 92 and the third holding portion 73. In this way, since the sandwiching member 92 approaches the third holding portion 73, the third end portion 9c of the processing target 5 is sandwiched by the sandwiching member 92 and the third holding portion 73.

Hereinabove, the configuration of the cutting device 100 according to the present embodiment has been described. Next, a procedure in which the processing target 5 is held by the holding device 60 will be described. As described above, in the present embodiment, the adapter 8 is attached to the processing target 5. The processing target 5 is held by the holding device 60 in a state in which the adapter 8 is attached thereto.

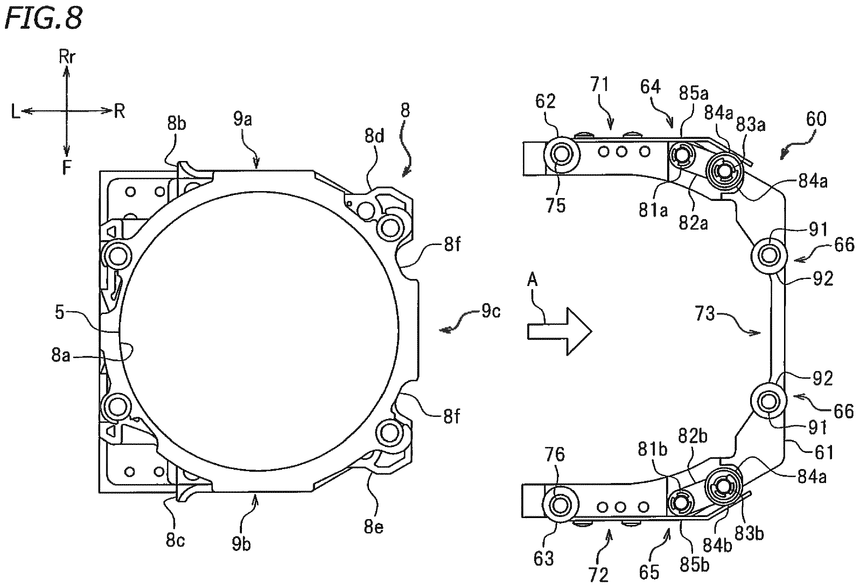

FIG. 8 is a plan view of the holding device 60 and the processing target 5 illustrating a state in which the processing target 5 is not held by the holding device 60. First, as illustrated in FIG. 8, it is assumed that the processing target 5 is disposed on the left side of the holding device 60. In this state, the processing target 5 moves toward the holding device 60 in the direction indicated by arrow A. In this case, the rear surface of the adapter 8 attached to the processing target 5 comes into contact with the first guide portion 62 provided in the first holding portion 71, and the front surface of the adapter 8 attached to the processing target 5 comes into contact with the second guide portion 63 provided in the second holding portion 72. When the processing target 5 moves further in the direction indicated by arrow A, the first and second guide portions 62 and 63 guide the movement of the processing target 5.

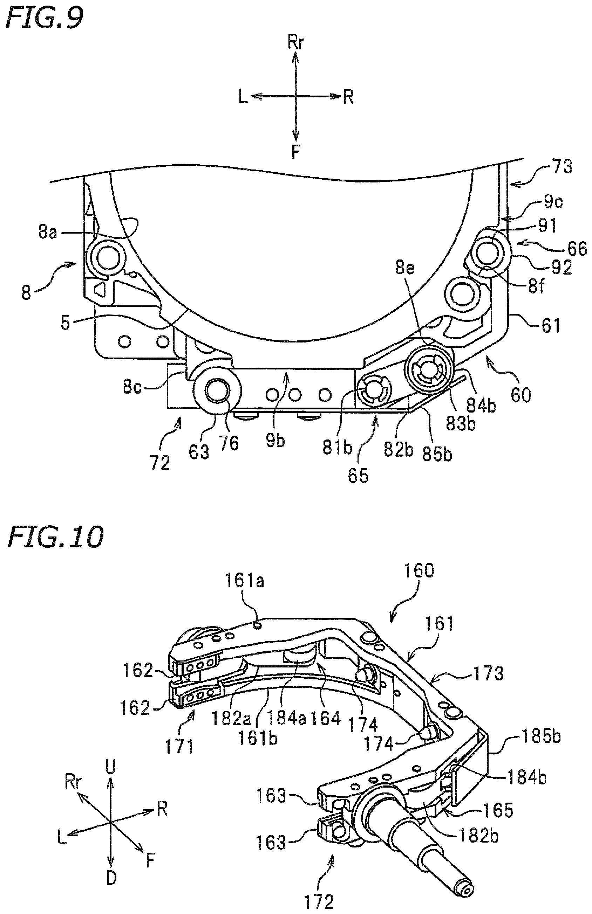

As illustrated in FIG. 9, when the processing target 5 moves further in the direction indicated by arrow A, the right surface of the adapter 8 comes into contact with the sandwiching members 92 of the two positioning portions 66 provided on the third holding portion 73. Specifically, the two positioning grooves 8f of the adapter 8 engage with the sandwiching members 92. In this case, the sandwiching member 92 is pushed toward the third holding portion 73 by the sandwiching spring 93 (see FIG. 7). As a result, the third end portion 9c of the processing target 5 is sandwiched between the sandwiching member 92 and the third holding portion 73.

At the same time, the first pressing groove 8d (see FIG. 8) of the adapter 8 engages with the first pressing member 84a of the first pressing mechanism 64. The second pressing groove 8e (see FIG. 8) of the adapter 8 engages with the second pressing member 84b of the second pressing mechanism 65. The processing target 5 is sandwiched between the first and second pressing mechanisms 64 and 65. Specifically, the first spring 85a of the first pressing mechanism 64 applies elastic force to the first pressing member 84a so that the first pressing member 84a is urged toward the second holding portion 72. In this way, the other end of the first rotating member 82a moves toward the second holding portion 72. With movement of the other end of the first rotating member 82a, the first pressing member 84a moves toward the second holding portion 72 in a state of pressing the first end portion 9a of the processing target 5. At the same time, the second spring 85b of the second pressing mechanism 65 applies elastic force to the second pressing member 84b so that the second pressing member 84b is urged toward the first holding portion 71. In this way, the other end of the second rotating member 82b moves toward the first holding portion 71. With movement of the other end of the second rotating member 82b, the second pressing member 84b moves toward the first holding portion 71 in a state of pressing the second end portion 9b of the processing target 5. In this way, a state in which the processing target 5 is held by the first and second pressing members 84a and 84b is created.

In such a state, the first locking projection 8b of the adapter 8 comes into contact with the first guide portion 62. As illustrated in FIG. 9, the second locking projection 8c of the adapter 8 comes into contact with the second guide portion 63. In this way, movement of the processing target 5 toward the third holding portion 73 (that is, toward the right side) is restricted. That is, the first locking projection 8b and the first guide portion 62 make contact with each other and the second locking projection 8c and the second guide portion 63 make contact with each other whereby the processing target 5 is positioned relative to the main body 61 of the holding device 60. In this way, the processing target 5 is held by the holding device 60.

When the processing target 5 is detached from the holding device 60, the processing target 5 is pulled toward the left side (that is, in the direction opposite to the direction indicated by arrow A). In this case, the first pressing groove 8d of the adapter 8 fitted into the first pressing member 84a of the first pressing mechanism 64 moves whereby the other end of the first pressing member 84a is pushed backward. At the same time, the second pressing groove 8e of the adapter 8 fitted into the second pressing member 84b of the second pressing mechanism 65 moves whereby the other end of the second pressing member 84b is pushed forward. In this way, the state in which the processing target 5 is sandwiched by the first and second pressing mechanisms 64 and 65 is released. Moreover, the processing target 5 is slid further leftward along the first and second guide portions 62 and 63, whereby the processing target 5 can be detached from the holding device 60.

In the present embodiment, in a state in which the first end portion 9a of the processing target 5 is disposed in the first holding portion 71 and the second end portion 9b of the processing target 5 is disposed in the second holding portion 72, the processing target 5 is moved toward the third holding portion 73 while being guided to the first and second guide portions 62 and 63. When the processing target 5 is moved and positioned between the first and second pressing mechanisms 64 and 65, a state in which the processing target 5 is pressed toward the second holding portion 72 by the first pressing mechanism 64 and is pressed toward the first holding portion 71 by the second pressing mechanism 65 is created. In this way, since the processing target 5 is sandwiched between the first and second pressing mechanisms 64 and 65, a state in which the processing target 5 is held by the holding device 60 is created. Therefore, the user can attach the processing target 5 to the holding device 60 without using a predetermined tool. Moreover, when the processing target 5 is detached from the holding device 60, the processing target 5 is pulled in the direction opposite to the direction indicated by arrow A in FIG. 8 whereby the pressing by the first and second pressing mechanisms 64 and 65 is released. Therefore, the user can detach the processing target 5 from the holding device 60 without using a predetermined tool. Therefore, the user can attach and detach the processing target 5 without using a predetermined tool. As a result, it is possible to alleviate operations of the user.

In the first pressing mechanism 64 according to the present embodiment, as illustrated in FIG. 6, the first shaft 81a is provided in the first holding portion 71. The first rotating member 82a is rotatably provided in the first shaft 81a. The first pressing member 84a pressed against the first end portion 9a of the processing target 5 is provided at the other end of the first rotating member 82a. Moreover, the first spring 85a applies elastic force to the first pressing member 84a so that the first pressing member 84a is urged toward the second holding portion 72. In the second pressing mechanism 65, the second shaft 81b is provided in the second holding portion 72. The second rotating member 82b is rotatably provided in the second shaft 81b. The second pressing member 84b pressed against the second end portion 9b of the processing target 5 is provided at the other end of the second rotating member 82b. Moreover, the second spring 85b applies elastic force to the second pressing member 84b so that the second pressing member 84b is urged toward the first holding portion 71.

In this way, the first spring 85a applies elastic force to the first pressing member 84a so that the first pressing member 84a is urged toward the second holding portion 72 whereby the first rotating member 82a rotates about the first shaft 81a. With this rotation, the first pressing member 84a moves toward the second holding portion 72. At the same time, the second spring 85b applies elastic force to the second pressing member 84b so that the second pressing member 84b is urged toward the first holding portion 71 whereby the second rotating member 82b rotates about the second shaft 81b. With the rotation of the second rotating member 82b, the second pressing member 84b moves toward the first holding portion 71. In this way, the processing target 5 disposed between the first and second pressing mechanisms 64 and 65 is held in a state of being sandwiched by the first and second rotating members 82a and 82b. Therefore, by using the elastic force of the first and second springs 85a and 85b, it is possible to easily hold the processing target 5 using the first and second rotating members 82a and 82b.

In the present embodiment, the first pressing member 84a is a roller that can rotate relative to the first roller shaft 83a provided at the other end of the first rotating member 82a. The second pressing member 84b is a roller that can rotate relative to the second roller shaft 83b provided at the other end of the second rotating member 82b. In this way, the first and second pressing members 84a and 84b perform a role of a guide when the processing target 5 moves in the left-right direction. Therefore, it is easy to move the processing target 5 in the left-right direction.

In the present embodiment, the positioning portion 66 is provided in the third holding portion 73 connected to the first and second holding portions 71 and 72. In this way, the processing target 5 comes into contact with the positioning portion 66 whereby the processing target 5 can be positioned relative to the main body 61 of the holding device 60. Therefore, it is possible to suppress the processing target 5 from being held by the holding device 60 in a state of being shifted from holding device 60.

In the present embodiment, a plurality of (in this example, two) positioning portions 66 are provided in the third holding portion 73. The two positioning portions 66 are aligned in the front-rear direction. In this way, when the processing target 5 comes into contact with the two positioning portions 66, the holding device 60 can hold the processing target 5 without being inclined with respect to the main body 61.

In the present embodiment, as illustrated in FIG. 7, the positioning portion 66 includes the sandwiching member 92 and the sandwiching spring 93. The sandwiching member 92 is a member that sandwiches the third end portion 9c of the processing target 5 in cooperation with the third holding portion 73. The sandwiching spring 93 is a spring that applies elastic force to the sandwiching member 92 so that the sandwiching member 92 is urged toward the third holding portion 73. In this way, in a state in which the third end portion 9c of the processing target 5 is disposed between the sandwiching member 92 and the third holding portion 73, the third end portion 9c of the processing target 5 is pressed against the third holding portion 73 by the sandwiching spring 93. Therefore, the positioning portion 66 can suppress the position in the up-down direction of the processing target 5 from being shifted relative to the holding device 60.

In the present embodiment, the movement in the left-right direction of the processing target 5 is guided by the first guide portion 62 provided in the first holding portion 71 and the second guide portion 63 provided in the second holding portion 72. In this way, since the processing target 5 moves in the left-right direction in a state of being sandwiched between the first and second guide portions 62 and 63, it is possible to move the processing target 5 in the left-right direction more appropriately.

In the present embodiment, as illustrated in FIG. 4, the holding device 60 is rotatably supported by the rotation supporting member 50. In this example, the first rotation shaft 57 is provided in the first holding portion 71 and the second rotation shaft (not illustrated) is provided in the second holding portion 72. The first rotation shaft 57 and the second rotation shaft are rotatably supported by the rotation supporting member 50. In this example, when the motor 55 is driven, the first rotation shaft 57 and the second rotation shaft rotate. Therefore, the holding device 60 rotates in the direction θx around the X-axis. In this way, the holding device 60 according to the present embodiment is a device which can be attached to a rotating mechanism.

Hereinabove, the cutting device 100 including the holding device 60 according to the first embodiment has been described. The holding device according to the present invention is not limited to the holding device 60 according to the first embodiment but can be implemented in various other embodiments. Next, other embodiments will be described briefly. In the following description, constituent elements having the same configuration as those described above will be denoted by the same symbols and the description thereof will be omitted appropriately.

### Second Embodiment

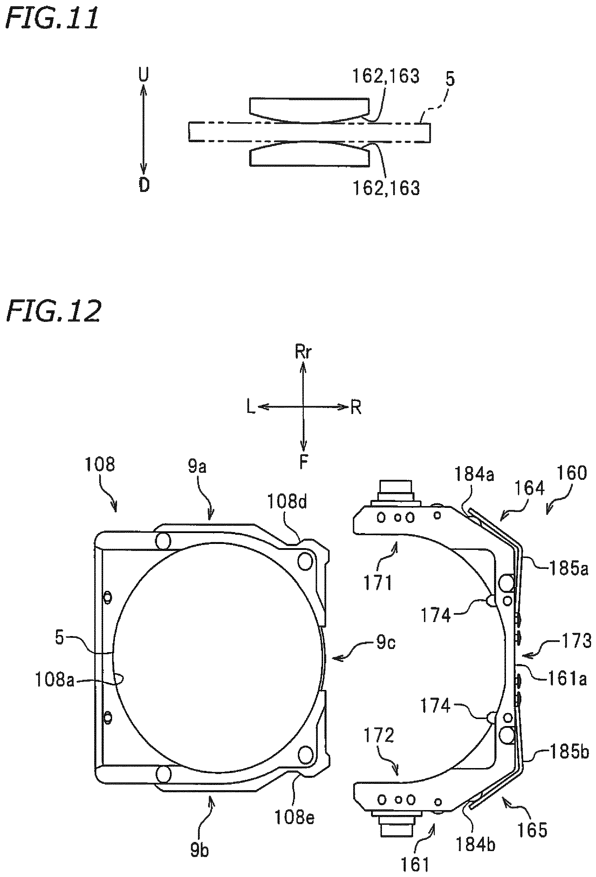

Next, a holding device 160 according to a second embodiment will be described. FIG. 10 is a perspective view of the holding device 160 according to the second embodiment. FIG. 11 is a conceptual diagram illustrating positional relationship between the processing target 5 and a pair of first guide portions 162 (a pair of second guide portions 163) of the holding device 160. FIG. 12 is a plan view of the holding device 160 and the processing target 5 illustrating a state in which the processing target 5 is not held by the holding device 160. The holding device 160 according to the present embodiment is configured to be rotatably supported by the rotation supporting member 50 (see FIG. 4) similarly to the first embodiment.

In the present embodiment, as illustrated in FIG. 12, the processing target 5 to which an adapter 108 is attached is held by the holding device 160. Here, a fitting hole 108a to which the processing target 5 is fitted is formed in a central portion of the adapter 108. A first pressing groove 108d is formed in a right portion of the rear surface of the adapter 108. The first pressing groove 108d is depressed toward the front side from the rear surface of the adapter 108. A second pressing groove 108e is formed in a right portion of the front surface of the adapter 108. The second pressing groove 108e is depressed toward the rear side from the front surface of the adapter 108.

As illustrated in FIG. 10, the holding device 160 includes a main body 161, a pair of first guide portions 162, a pair of second guide portions 163, a first pressing mechanism 164, and a second pressing mechanism 165.

The main body 161 has an approximately C-shape in a plan view. In the present embodiment, the main body 161 includes a first main body member 161a and a second main body member 161b. In this example, the first and second main body members 161a and 161b have an approximately C-shape in a plan view. The first main body member 161a is disposed above the second main body member 161b. The main body 161 includes a first holding portion 171 extending in the left-right direction, a second holding portion 172 facing the first holding portion 171 and extending in the left-right direction, and a third holding portion 173 connected to the right end of the first holding portion 171 and the right end of the second holding portion 172. The third holding portion 173 extends in the front-rear direction.

The pair of first guide portions 162 are provided between the first and second main body members 161a and 161b so as to face each other in the up-down direction. The upper first guide portion 162 is provided in a left portion of the lower surface of the first holding portion 171 of the first main body member 161a. The lower first guide portion 162 is provided in a left portion of the upper surface of the first holding portion 171 of the second main body member 161b. As illustrated in FIG. 11, the upper first guide portion 162 is inclined downward as it advances rightward from the left end. Moreover, the lower first guide portion 162 is inclined upward as it advances rightward from the left end.

As illustrated in FIG. 10, the pair of second guide portions 163 are provided between the first and second main body members 161a and 161b so as to face each other in the up-down direction. The upper second guide portion 163 is provided in a left portion of the lower surface of the second holding portion 172 of the first main body member 161a. The lower second guide portion 163 is provided in a left portion of the upper surface of the second holding portion 172 of the second main body member 161b. As illustrated in FIG. 11, the upper second guide portion 163 is inclined upward as it advances rightward from the left end similarly to the upper first guide portion 162. Moreover, the lower second guide portion 163 is inclined upward as it advances rightward from the left end similarly to the lower first guide portion 162. In the present embodiment, the upper first guide portion 162, the lower first guide portion 162, the upper second guide portion 163, and the lower second guide portion 163 are members having the same shape. However, the upper first guide portion 162 and the lower first guide portion 162 may have different shapes. Moreover, the upper second guide portion 163 and the lower second guide portion 163 may have different shapes. In the present embodiment, the pair of first guide portions 162 and the pair of second guide portions 163 are formed of rubber. However, materials for forming the pair of first guide portions 162 and the pair of second guide portions 163 are not particularly limited.

As illustrated in FIG. 10, the first pressing mechanism 164 is a mechanism that presses the processing target 5 toward the second holding portion 172 (that is, toward the front side). In this example, the first pressing mechanism 164 is provided between the first main body member 161a and the second main body member 161b and is provided in the first holding portion 171 of the main body 161.

In the present embodiment, the first pressing mechanism 164 includes a first shaft (not illustrated) provided between the first main body member 161a and the second main body member 161b, a first rotating member 182a rotatably provided in the first shaft, a first roller shaft (not illustrated) provided at the other end of the first rotating member 182a, a first pressing member 184a provided so as to be rotatable relative to the first roller shaft, and a first spring 185a (see FIG. 12) that applies elastic force to the first pressing member 184a so that the first pressing member 184a is urged toward the second holding portion 172.

The second pressing mechanism 165 is a mechanism that presses the processing target 5 toward the first holding portion 171 (that is, toward the rear side). In this example, the second pressing mechanism 165 is provided between the first main body member 161a and the second main body member 161b and is provided in the second holding portion 172 of the main body 161.

In the present embodiment, the second pressing mechanism 165 includes a second shaft (not illustrated) provided between the first main body member 161a and the second main body member 161b, a second rotating member 182b rotatably provided in the second shaft, a second roller shaft (not illustrated) provided at the other end of the second rotating member 182b, a second pressing member 184b provided so as to be rotatable relative to the second roller shaft, and a second spring 185b that applies elastic force to the second pressing member 184b so that the second pressing member 184b is urged toward the first holding portion 171. For example, the first and second pressing members 184a and 184b are rollers. The first and second springs 185a and 185b are plate springs.

In the present embodiment, although not illustrated in the drawings, in a state in which the processing target 5 to which the adapter 108 is attached is held by the holding device 160, the first pressing groove 108d (see FIG. 12) of the adapter 108 is fitted into the first pressing member 184a. Although not illustrated in the drawings, in a state in which the processing target 5 to which the adapter 108 is attached is held by the holding device 160, the second pressing groove 108e (see FIG. 12) of the adapter 108 is fitted into the second pressing member 184b. In this way, in a state in which the processing target 5 is sandwiched by the first and second pressing members 184a and 184b, movement in the left-right direction of the processing target 5 is restricted.

In the present embodiment, an insertion projection 174 which is inserted into an insertion hole (not illustrated) formed in the right surface of the adapter 108 attached to the processing target 5 is formed on the left surface of the third holding portion 173 of the main body 161. In this example, two insertion holes are formed in the right surface of the adapter 108. Two insertion projections 174 are formed on the left surface of the third holding portion 173 so as to be aligned in the front-rear direction. When the processing target 5 is held by the holding device 160, the insertion projection 174 is inserted into the insertion hole. In this way, in a state in which the processing target 5 is held by the holding device 160, it is possible to suppress the processing target 5 from being shifted from the holding device 160.

As described above, in the present embodiment, in a state in which the first end portion 9a of the processing target 5 is held by the first holding portion 171 of the main body 161 and the second end portion 9b of the processing target 5 is held by the second holding portion 172 of the main body 161, the processing target 5 moves toward the third holding portion 173 while being guided to the pair of first guide portions 162 and the pair of second guide portions 163. Moreover, when the processing target 5 is moved and positioned between the first pressing mechanism 164 and the second pressing mechanism 165, a state in which the processing target 5 is pressed toward the second holding portion 172 by the first pressing mechanism 164 and is pressed toward the first holding portion 171 by the second pressing mechanism 165 is created.

In this way, a state in which the processing target 5 is sandwiched between the first pressing mechanism 164 and the second pressing mechanism 165 is created. Therefore, a state in which the processing target 5 is held by the holding device 160 is created. Therefore, the user can hold the processing target 5 by the holding device 160 without using a predetermined tool. Moreover, when the processing target 5 is detached from the holding device 160, the processing target 5 is pulled toward the left side from the holding device 160 similarly to the first embodiment. In this way, pressing by the first and second pressing mechanisms 164 and 165 is released. Therefore, the user can detach the processing target 5 from the holding device 160 without using a predetermined tool. Therefore, in the holding device 160 according to the present embodiment, the user can attach and detach the processing target 5 without using a predetermined tool similarly to the first embodiment. As a result, it is possible to alleviate user's burdens.

While preferred embodiments of the present invention have been described above, it is to be understood that variations and modifications will be apparent to those skilled in the art without departing from the scope of the present invention. The scope of the present invention, therefore, is to be determined solely by the following claims.

## Claims

1. A processing target holding device comprising:
an adapter (8) that is attached to a processing target (5);
a first holding portion (71) that holds a first end portion (9a), which is one end in a first direction of the processing target (5), and extends in a second direction orthogonal to the first direction;
a second holding portion (72) that holds a second end portion (9b), which is an end on an opposite side of the processing target (5) to the first end portion (9a), and extends in the second direction at a position facing the first holding portion (71);
a guide portion (62, 63) that is provided in at least any one of the first holding portion (71) and the second holding portion (72) to guide movement of the processing target (5) in the second direction;
a first pressing mechanism (64) that is provided in the first holding portion (71) to press the processing target (5) toward the second holding portion (72); and
a second pressing mechanism (65) that is provided in the second holding portion (72) so as to face the first pressing mechanism (64) to press the processing target (5) toward the first holding portion (71); **characterised in that**
the first pressing mechanism (64) includes:
a first shaft (81a) that is provided in the first holding portion (71);
a first rotating member (82a) that has one end provided in the first shaft (81a) and that is rotatable relative to the first shaft (81a);
a first pressing member (84a) that is provided at the other end of the first rotating member (82a) and that is pressed against the first end portion (9a) of the processing target (5); and
a first spring (85a) that applies elastic force to the first pressing member (84a) so that the first pressing member (84a) is urged in a direction toward the second holding portion (72).

2. The processing target holding device according to claim 1, wherein
the first pressing mechanism (64) includes a first roller shaft (83a) provided at the other end of the first rotating member (82a), and
the first pressing member (84a) is a roller that is rotatable relative to the first roller shaft (83a).

3. The processing target holding device according to claim 1, wherein
the second pressing mechanism (65) includes:
a second shaft (81b) that is provided in the second holding portion (72);
a second rotating member (82b) that has one end provided in the second shaft (81b) and that is rotatable relative to the second shaft (81b);
a second pressing member (84b) that is provided at the other end of the second rotating member (82b) and that is pressed against the second end portion (9b) of the processing target (5); and
a second spring (85b) that applies elastic force to the second pressing member (84b) so that the second pressing member (84b) is urged in a direction toward the first holding portion (71).

4. The processing target holding device according to claim 3, wherein
the second pressing mechanism (65) includes a second roller shaft (83b) provided at the other end of the second rotating member (82b), and
the second pressing member (84b) is a roller that is rotatable relative to the second roller shaft (83b).

5. The processing target holding device according to claim 1, further comprising:
a third holding portion (73) that is connected to an end of the first holding portion (71) and an end of the second holding portion (72).

6. The processing target holding device according to claim 5, further comprising:
a positioning portion (66) that is provided in the third holding portion (73) so that the processing target (5) is pressed against the positioning portion.

7. The processing target holding device according to claim 6, wherein
a plurality of the positioning portions (66) are provided in the third holding portion (73).

8. The processing target holding device according to claim 6, wherein
the positioning portion (66) includes:
sandwiching members (92) that sandwich a third end portion (9c), which is an end of the processing target (5) in the second direction, in cooperation with the third holding portion (73); and
a sandwiching spring (93), which is a spring that applies elastic force to each of the sandwiching members (92) so that the sandwiching member (92) is urged toward the third holding portion (73).

9. The processing target holding device according to claim 8, wherein
the positioning portion (66) includes a pin (91) which extends upward from the third holding portion (73) and to which the sandwiching member (92) is rotatably inserted.

10. The processing target holding device according to claim 9, wherein
an accommodation hole (94) is formed in an upper surface of the sandwiching member (92), and
the sandwiching spring (93) is accommodated in the accommodation hole (94) and is disposed to surround a shaft of the pin (91).

11. A cutting device comprising:
the processing target holding device (60) according to claim 1; and
a cutting portion (30) that cuts the processing target (5) held by the processing target holding device (60).

12. The cutting device according to claim 11, further comprising:
a rotation supporting member (50) that rotatably supports the processing target holding device (60).

## Patentansprüche

1. Bearbeitungszielobjekt-Haltevorrichtung, mit:
einem Adapter (8), der an einem Bearbeitungszielobjekt (5) angebracht ist;
einem ersten Haltebereich (71), der einen ersten Endbereich (9a), der ein Ende des Bearbeitungszielobjekts (5) in einer ersten Richtung ist, hält und der sich in einer zweiten Richtung senkrecht zu der ersten Richtung erstreckt;
einem zweiten Haltebereich (72), der einen zweiten Endbereich (9b), der ein Ende auf einer gegenüberliegenden Seite des Bearbeitungszielobjekts (5) in Bezug auf den ersten Endbereich (9a) ist, hält und sich in der zweiten Richtung in einer Stellung so erstreckt, dass er dem ersten Haltebereich (71) zugewandt ist;
einem Führungsbereich (62, 63), der in dem ersten Haltebereich (71) und/oder dem zweiten Haltebereich (72) zum Führen einer Bewegung des Bearbeitungszielobjekts (5) in der zweiten Richtung vorgesehen ist;
einem ersten Andrückmechanismus (64), der in dem ersten Haltebereich (71) zum Andrücken des Bearbeitungszielobjekts (5) in Richtung zu dem zweiten Haltebereich (72) vorgesehen ist; und
einem zweiten Andrückmechanismus (65), der in dem zweiten Haltebereich (72) derart vorgesehen ist, dass er dem ersten Andrückmechanismus (64) gegenüberliegt, um das Bearbeitungszielobjekt (5) in Richtung zu dem ersten Haltebereich (71) zu drücken;
**dadurch gekennzeichnet, dass**
der erste Andrückmechanismus (64) aufweist:
einen ersten Schaft (81a), der in dem ersten Haltebereich (71) vorgesehen ist;
ein erstes Drehelement (82a), dessen ein Ende in dem ersten Schaft (81a) vorgesehen ist und das relativ zu dem ersten Schaft (81a) drehbar ist;
ein erstes Andrückelement (84a), das an dem anderen Ende des ersten Drehelements (82a) vorgesehen ist und das an den ersten Endbereich (9a) des Bearbeitungszielobjekts (5) gedrückt wird; und
eine erste Feder (85a), die eine elastische Kraft auf das erste Andrückelement (84a) derart ausübt, dass das erste Andrückelement (84a) in einer Richtung zu dem zweiten Haltebereich (72) gedrückt wird.

2. Bearbeitungszielobjekt-Haltevorrichtung nach Anspruch 1, wobei
der erste Andrückmechanismus (64) einen ersten Walzenschaft (83a) aufweist, der an dem anderen Ende des ersten Drehelements (82a) vorgesehen ist, und
das erste Andrückelement (84a) eine Walze ist, die relativ zu dem ersten Walzenschaft (83a) drehbar ist.

3. Bearbeitungszielobjekt-Haltevorrichtung nach Anspruch 1, wobei
der zweite Andrückmechanismus (65) aufweist:
einen zweiten Schaft (81b), der in dem zweiten Haltebereich (72) vorgesehen ist;
ein zweites Drehelement (82b), dessen ein Ende in dem zweiten Schaft (81b) vorgesehen ist und das relativ zu dem zweiten Schaft (81b) drehbar ist;
ein zweites Andrückelement (84b), das an dem anderen Ende des zweiten Drehelements (82b) vorgesehen ist und das an den zweiten Endbereich (9b) des Bearbeitungszielobjekts (5) gedrückt wird; und
eine zweite Feder (85b), die eine elastische Kraft auf das zweite Andrückelement (84b) derart ausübt, dass das zweite Andrückelement (84b) in Richtung zu dem ersten Haltebereich (71) gedrückt wird.

4. Bearbeitungszielobjekt-Haltevorrichtung nach Anspruch 3, wobei
der zweite Andrückmechanismus (65) einen zweiten Walzenschaft (83b) aufweist, der an dem anderen Ende des zweiten Drehelements (82b) vorgesehen ist, und
das zweite Andrückelement (84b) eine Walze ist, die relativ zu dem zweiten Walzenschaft (83b) drehbar ist.

5. Bearbeitungszielobjekt-Haltevorrichtung nach Anspruch 1, die ferner aufweist:
einen dritten Haltebereich (73), der mit einem Ende des ersten Haltebereichs (71) und einem Ende des zweiten Haltebereichs (72) verbunden ist.

6. Bearbeitungszielobjekt-Haltevorrichtung nach Anspruch 5, die ferner aufweist:
einen Positionierbereich (66), der in dem dritten Haltebereich (73) derart vorgesehen ist, dass das Bearbeitungszielobjekt (5) an den Positionierbereich gedrückt wird.

7. Bearbeitungszielobjekt-Haltevorrichtung nach Anspruch 6, wobei
mehrere der Positionierbereiche (66) in dem dritten Haltebereich (73) vorgesehen sind.

8. Bearbeitungszielobjekt-Haltevorrichtung nach Anspruch 6, wobei
der Positionierbereich (66) aufweist:
Einschlusselemente (92), die einen dritten Endbereich (9c), der ein Ende des Bearbeitungszielobjekts (5) in der zweiten Richtung ist, zusammen mit dem dritten Haltebereich (73) einschließen; und
eine Einschlussfeder (93), die eine Feder ist, die auf jedes der Einschlusselemente (92) eine elastische Kraft derart ausübt, dass das Einschlusselement (92) in Richtung zu dem dritten Haltebereich (73) gedrückt wird.

9. Bearbeitungszielobjekt-Haltevorrichtung nach Anspruch 8, wobei
der Positionierbereich (66) einen Stift (91) enthält, der sich von dem dritten Haltebereich (73) aus nach oben erstreckt und in den das Einschlusselement (92) drehbar eingeführt ist.

10. Bearbeitungszielobjekt-Haltevorrichtung nach Anspruch 9, wobei
ein Aufnahmeloch (94) in einer oberen Fläche des Einschlusselements (92) ausgebildet ist, und
die Einschlussfeder (93) in dem Aufnahmeloch (94) aufgenommen und angeordnet ist, einen Schaft des Stifts (91) zu umschließen.

11. Schneidvorrichtung, mit:
der Bearbeitungszielobjekt-Haltevorrichtung (60) nach Anspruch 1; und
einem Schneidebereich (30), der das Bearbeitungszielobjekt (5), das von der Bearbeitungszielobjekt-Haltevorrichtung (60) gehalten wird, schneidet.

12. Schneidvorrichtung nach Anspruch 11, die ferner aufweist:
ein Drehhalteelement (50), das die Bearbeitungszielobjekt-Haltevorrichtung (60) drehbar hält.

## Revendications

1. Dispositif de maintien de cible de traitement comprenant :
un adaptateur (8) qui est fixé à une cible de traitement (5) ;
une première partie de maintien (71) qui maintient une première partie d'extrémité (9a), qui est une extrémité dans un premier sens de la cible de traitement (5), et qui s'étend dans un second sens orthogonal au premier sens ;
une seconde partie de maintien (72) qui maintient une seconde partie d'extrémité (9b), qui est une extrémité sur un côté opposé de la cible de traitement (5) vers la première partie d'extrémité (9a), et qui s'étend dans le second sens sous une position faisant face à la première partie de maintien (71) ;
une partie de guidage (62, 63) qui est disposée dans au moins l'une quelconque de la première partie de maintien (71) et de la seconde partie de maintien (72) pour guider le mouvement de la cible de traitement (5) dans le second sens ;
un premier mécanisme de pression (64) qui est disposé dans la première partie de maintien (71) pour presser la cible de traitement (5) vers la seconde partie de maintien (72) ; et
un second mécanisme de pression (65) qui est disposé dans la seconde partie de maintien (72) afin de faire face au premier mécanisme de pression (64) pour presser la cible de traitement (5) vers la première partie de maintien (71) ;
**caractérisé en ce que** le premier mécanisme de pression (64) comprend :
une première tige (81a) qui est disposée dans la première partie de maintien (71) ;
un premier élément de rotation (82a) qui possède une extrémité disposée dans la première tige (81a) et qui peut tourner par rapport à la première tige (81a) ;
un premier élément de pression (84a) qui est disposé au niveau de l'autre extrémité du premier élément de rotation (82a) et qui est pressé contre la première partie d'extrémité (9a) de la cible de traitement (5) ; et
un premier ressort (85a) qui applique la force élastique au premier élément de pression (84a) de sorte que le premier élément de pression (84a) est poussé dans un sens vers la seconde partie de maintien (72).

2. Dispositif de maintien de cible de traitement selon la revendication 1, dans lequel
le premier mécanisme de pression (64) comprend une première tige de rouleau (83a) disposée au niveau de l'autre extrémité du premier élément de rotation (82a), et
le premier élément de pression (84a) est un rouleau qui peut tourner par rapport à la première tige de rouleau (83a).

3. Dispositif de maintien de cible de traitement selon la revendication 1, dans lequel
le second mécanisme de pression (65) comprend :
une seconde tige (81b) qui est disposée dans la seconde partie de maintien (72) ;
un second élément de rotation (82b) qui possède une extrémité disposée dans la seconde tige (81b) et qui peut tourner par rapport à la seconde tige (81b) ;
un second élément de pression (84b) qui est disposé au niveau de l'autre extrémité du second élément de rotation (82b) et qui est pressé contre la seconde partie d'extrémité (9b) de la cible de traitement (5) ; et
un second ressort (85b) qui applique la force élastique au second élément de pression (84b) de sorte que le second élément de pression (84b) est poussé dans un sens vers la première partie de maintien (71).

4. Dispositif de maintien de cible de traitement selon la revendication 3, dans lequel
le second mécanisme de pression (65) comprend une seconde tige de rouleau (83b) disposée au niveau de l'autre extrémité du second élément de rotation (82b), et
le second élément de pression (84b) est un rouleau qui peut tourner par rapport à la seconde tige de rouleau (83b).

5. Dispositif de maintien de cible de traitement selon la revendication 1, comprenant en outre :
une troisième partie de maintien (73) qui est reliée à une extrémité de la première partie de maintien (71) et une extrémité de la seconde partie de maintien (72).

6. Dispositif de maintien de cible de traitement selon la revendication 5, comprenant en outre :
une partie de positionnement (66) qui est disposée dans la troisième partie de maintien (73) de sorte que la cible de traitement (5) est pressée contre la partie de positionnement.

7. Dispositif de maintien de cible de traitement selon la revendication 6, dans lequel
une pluralité des parties de positionnement (66) sont disposées dans la troisième partie de maintien (73).

8. Dispositif de maintien de cible de traitement selon la revendication 6, dans lequel
la partie de positionnement (66) comprend :
des éléments de mise en sandwich (92) qui prennent en sandwich une troisième partie d'extrémité (9c), qui est une extrémité de la cible de traitement (5) dans le second sens, en coopération avec la troisième partie de maintien (73) ; et
un ressort de mise en sandwich (93), qui est un ressort qui applique la force élastique à chacun des éléments de mise en sandwich (92) de sorte que l'élément de mise en sandwich (92) est poussé vers la troisième partie de maintien (73).

9. Dispositif de maintien de cible de traitement selon la revendication 8, dans lequel
la partie de positionnement (66) comprend une goupille (91) qui s'étend vers le haut depuis la troisième partie de maintien (73) et au niveau de laquelle l'élément de mise en sandwich (92) est inséré de manière à pouvoir tourner.

10. Dispositif de maintien de cible de traitement selon la revendication 9, dans lequel
un trou de logement (94) est formé dans une surface supérieure de l'élément de mise en sandwich (92), et
le ressort de mise en sandwich (93) est logé dans le trou de logement (94) et est disposé pour entourer une tige de la goupille (91).

11. Dispositif de coupe comprenant :
le dispositif de maintien de cible de traitement (60) selon la revendication 1 ; et
une partie de coupe (30) qui coupe la cible de traitement (5) maintenue par le dispositif de maintien de cible de traitement (60).

12. Dispositif de coupe selon la revendication 11, comprenant en outre :
un élément de support de rotation (50) qui supporte de manière à pouvoir tourner le dispositif de maintien de cible de traitement (60).
